# NEUE EUROPÄISCHE PATENTSCHRIFT

(11) **EP 0 525 453 B2**
(45) Veröffentlichungstag und Bekanntmachung des Hinweises auf die Entscheidung über den Einspruch: **28.01.1998**
(45) Hinweis auf die Patenterteilung: 01.02.1995
(21) Anmeldenummer: 92111563.0
(22) Anmeldetag: 08.07.1992
(51) Int. Cl.: A47J 36/02

(54) **Arbeitsverfahren zur Herstellung eines Gar- oder Kochgerätes**
Method of manufacturing a cooking vessel
Procédé de fabrication d'un récipient de cuisson

(30) Priorität: 30.07.1991 DE 4125115
(43) Veröffentlichungstag der Anmeldung: 03.02.1993
(73) Patentinhaber: FISSLER GMBH, D-55743 Idar-Oberstein (DE)
(72) Erfinder: Galle, Alfred, W-6580 Idar-Oberstein (DE)
(74) Vertreter: Honke, Manfred, Dr.-Ing.

(56) Entgegenhaltungen:
- EP-A- 0 209 745
- EP-A- 0 324 061
- WO-A-87/04911
- DE-B- 2 258 795
- Fissler-Programm 89/90 mit ABC der Küchensprache

## Beschreibung

Die Erfindung betrifft ein Arbeitsverfahren zur Herstellung eines Gar- oder Kochgerätes mit rundem Aufnahmebehälter für das Gar- oder Kochgut, der einen Aufnahmebehälterboden, eine Platine aus wärmeleitendem Platinenwerkstoff und eine Kapselabdeckung der Platine aufweist, welche Kapselabdeckung aus einer runden Blechscheibe geformt und mit ihrem Kapselabdeckungsboden zum Aufnahmebehälter hin mit konvexer Krümmung versehen ist sowie mit einem Kapselabdeckungskragen an dem runden Aufnahmebehälter in einem gekrümmten Übergangsbereich zwischen Aufnahmebehälterboden und Aufnahmebehältermantel anliegt, wobei der Aufnahmebehälter sowie die Kapselabdeckung aus nichtrostendem Stahl bestehen und die Platine mit dem Aufnahmebehälterboden und der Kapselabdeckung intermetallisch verbunden ist. - Solche Gar- oder Kochgeräte sind in verschiedenen Ausführungen bekannt.

Die Erfindung geht aus von einem Arbeitsverfahren, bei dem die Platine, die Blechscheibe und der Aufnahmebehälterboden zentriert und durch eine elektrische Widerstandsschweißung mit zentralem Schweißpunkt verbunden werden und wobei danach durch eine einfache oder mehrfache Impulspressung mit Fließverformung die intermetallische Verbindung hergestellt und an der Blechscheibe der Kapselabdeckungskragen angeformt wird, der mit seinem Rand umlaufend an den Aufnahmebehälter angelegt wird. Es versteht sich, daß das Arbeitsverfahren, von dem die Erfindung ausgeht, und damit auch das erfindungsgemäße Arbeitsverfahren bei Umgebungstemperatur oder als Warmverformungsverfahren durchgeführt werden können. Die Impulsenergie ist nach Maßgabe der Temperatur einzurichten, die der Aufnahmebehälter zumindest im Bereich des Aufnahmebehälterbodens, die Blechscheibe sowie die Platine aufweisen. Zumeist werden diese Temperaturen so gewählt, daß sie im Bereich, aber ausreichend unterhalb der Schmelztemperatur des Platinenwerkstoffes liegen. Ein sehr gebräuchlicher Platinenwerkstoff ist Aluminium in Form von technisch reinem Aluminium, Gebräuchlich als Platinenwerkstoff ist auch Kupfer. Bei den Gar- und Kochgeräten kann es sich um Töpfe, Pfannen und dergleichen Geräte handeln, insbesondere um Kochtöpfe und Dampfkochtöpfe. Die Platine dient der Verbesserung des Wärmeüberganges von einem Kochfeld oder einer Herdplatte auf das Gar- oder Kochgut. Dieser Wärmeübergang ist beeinträchtigt, wenn die intermetallische Verbindung gestört ist. Das gilt insbesondere dann, wenn die Störung im Bereich des Kapselabdeckungskragens auftritt, von wo aus sie sich beim Gebrauch des Gar- oder Kochgerätes erfahrungsgemäß auch fortpflanzen kann.

Das bekannte Verfahren, von dem die Erfindung ausgeht (DE-PS 22 58 795) führt nicht zu einem Gar- oder Kochgerät dessen Kapselabdeckungsboden zum Aufnahmebehälter hin mit konvexer Krümmung versehen ist. Es entsteht vielmehr ein praktisch ebener Kapselabdeckungsboden. Es wird mit einer ebenen Blechscheibe gearbeitet deren Randkante bei der Ausformung des Kapselabdeckungskragens eine bleibende Verformung an dem Aufnahmebehälter nicht ausbilden kann und nicht ausbilden soll. Es soll sich lediglich die Randkante der Blechscheibe verformen oder mit einer Kantenabschrägung versehen werden, die sich an den Aufnahmebehälter anschmiegt. Dazu ist ihr Durchmesser kleiner als der äußere Nenndurchmesser des Topfes. Die Impulspressung formt den ebenen Kapselabdeckungsboden und dabei wird auch der Kapselabdeckungskragen angeformt. Die Praxis hat gezeigt, daß nicht sichergestellt werden kann, daß die intermetallische Verbindung zwischen Kapselabdeckung mit Kapselabdeckungsboden und Kapselabdeckungskragen und Platine sowie zwischen Platine und Aufnahmebehälterboden sich störungsfrei ausbildet. Häufig wird die vor der Impulspressung eingerichtete Zentrierung zerstört und Ausschuß produziert.

Bei einem anderen bekannten Verfahren (EP 0 209 745) wird wie folgt gearbeitet: Die Platine wird am Kapselabdeckungsboden der vorgeformten Kapselabdeckung mittels Punktschweißung befestigt. Das Aggregat aus Kapselabdeckung, Platine und Aufnahmebehälterboden bzw. Aufnahmebehälter wird auf eine Temperatur erwärmt, die nahe dem Schmelzpunkt des Platinenwerkstoffs liegt, jedoch unterhalb dieses Schmelzpunktes verbleibt. Die Anfangsdicke der Platine ist mindestens 20 % größer als die Enddicke der Platine nach Herstellung der intermetallischen Verbindung. In einer ersten Phase der Impulspressung wird der Druck fortschreitend, vom Zentrum des Aggregates ausgehend zum Rand des Aggregates hin, aufgebracht, wobei eine besondere Konvexität eingerichtet wird, und zwar derart, daß die gesamte Krümmung der Konvexität der verformten Platine und des Aufnahmebehälters gleich oder größer als 0,25 % des mittleren Durchmessers dieses Aufnahmebehälterbodens in seiner endgültigen Form beträgt. Auf diese Weise soll die Luft vom Zentrum nach außen aus dem Aggregat aus Aufnahmebehälterboden, Platine und Kapselabdeckung herausgedrückt werden. Diese bekannte Verfahrensweise führt jedoch wegen der Bedingungen, daß einerseits die Anfangsdicke der Platine mindestens 20 % größer sein muß als die Enddicke dieser Platine nach Herstellung der intermetallischen Verbindung, daß andererseits die Konvexität wie vorstehend beschrieben einzurichten ist, zu Zwängen die die Anwendbarkeit der beschriebenen Verfahrensmaßnahmen beschränken. Im übrigen fehlt eine Vorschrift dahingehend die Punktschweißverbindung zentral anzuordnen und impulspressungsfest auszubilden. Reißt die Punktschweißverbindung bei der Impulspressung ab, so können Verschiebungen bei der Impulspressung nicht ausgeschlossen werden. Danach ist nicht gewährleistet, daß die Platine auch in ihrem Randbereich und an dem Kapselabdeckungskragen eine allen Anforderungen genügende intermetallische Verbindung erfährt. Tatsächlich ist jedoch eine einwandfreie intermetallische Verbindung insgesamt und gerade im Bereich des Kapselabdeckungsbodens von großer Bedeutung (vgl. Zeitschrift "Materialprüfung" 33 (1991) 4, S. 89 bis 91). Sie kann bisher in einer laufenden, weitgehend automatisierten Fertigung nicht sichergestellt werden, wenn nicht von einer vorgeformten Kapselabdeckung, sondern von einer mehr oder weniger ebenen Blechscheibe ausgegangen wird.

Der Erfindung liegt die Aufgabe zugrunde, das vorstehend zuerst beschriebene Verfahren (DE 22 58 795) so zu führen, daß ein Gar- und Kochgerät des eingangs beschriebenen Aufbaus mit einer zum Aufnahmebehälter hin mit konvexer Krümmung versehenen Kapselabdeckungsboden und Kapselabdeckungskragen hergestellt werden kann, der allen Anforderungen genügt.

Zur Lösung dieser Aufgabe lehrt die Erfindung, daß mit einer Platine gearbeitet wird, deren Dicke vor der Fließverformung im kalten Zustand um maximal 16 % dicker ist als nach der Fließverformung, daß mit einer Blechscheibe gearbeitet wird, deren Randkante bei der Ausformung des Kapselabdeckungskragens unter Ausbildung einer bleibenden stufenartigen Verformung an dem Aufnahmebehälter an diesen angepreßt wird daß diese Blechscheibe, die Platine und der Aufnahmebehälterboden durch die Widerstandsschweißung impulspressungsfest zentriert werden,
daß die Impulspressung unter Ausformung der konvexen Krümmung des Kapselabdeckungsbodens durchgeführt wird,
daß bei der Impulspressung zuerst die Luft aus dem Bereich zwischen der Blechscheibe und dem sich ausbildenden Kapselabdeckungskragen herausgedrückt sowie dabei und danach die bleibende stufenartige Verformung als Dichtung in bezug auf die Fließverformung des Platinenwerkstoffes ausgebildet sowie der Platinenwerkstoff mit einem Platinenkragen bis in den Bereich der Dichtung gepreßt wird.

Es versteht sich, daß die Werkzeuge, d. h. die Matrize und der Stempel, mit denen in einer Presse die Impulspressung durchgeführt wird, so eingerichtet sind, daß die vorstehend betonte leicht konvexe Ausformung des Kapselabdeckungsbodens sich einstellt. Zumeist ist der Aufnahmebehälterboden nach außen leicht konvex gekrümmt. Es versteht sich fernerhin, daß die geometrischen Verhältnisse in bezug auf den Aufnahmebehälterboden, die Kapselabdeckung und die Platine so einzurichten sind, daß bei dem fertigen Gar- oder Kochgerät die Platine den Zwischenraum zwischen Aufnahmebehälterboden und Kapselabdeckung vollständig ausfsüllt, d. h. bei der Herstellung der intermetallischen Verbindung einen Platinenkragen ausbildet, der dicht oder sehr dicht bis in den Bereich der beschriebenen Dichtung hineinragt. Ein definierter ungestörter Fließvorgang des Werkstoffes der Platine ist für die intermetallische Verbindung wichtig. Die Platine kann als ebene Platte, aber auch mit gleichsam linsenförmigem Querschnitt oder gestuftem Querschnitt ausgeführt sein. Im Rahmen der Erfindung liegt es, die der Platine zugewandte Oberfläche der Kapselabdeckung und des Aufnahmebehälterbodens so einzurichten, daß die intermetallische Verbindung gefördert wird. Dazu kann mit einer Anätzung, einer Aufrauhung oder dergleichen gearbeitet werden. Von besonderer Bedeutung ist es fernerhin, daß der Kapselabdeckungskragen mit seinem Rand an den Aufnahmebehälter störungsfrei anschließt. Tritt hier Platinenwerkstoff aus oder fehlt die beschriebene Dichtung, so muß der Aufnahmebehälter aus ästhetischen Gründen oder aus korrosionstechnischen Gründen verworfen werden. Klafft ein Spalt, so kann bei Gebrauch oder Spülung Wasser eintreten und störende Korrosionen auslösen. Obgleich erfindungsgemäß der Dickenüberschuß der Platine, der maximal 16 % größer ist als nach der Fließverformung, verhältnismäßig gering ist, erreicht die Erfindung eine einwandfreie intermetallische Verbindung. Die beschriebene Ausformung des Kapselabdeckungskragens unter Ausbildung einer bleibenden Verformung an dem Aufnahmebehälter bei der Impulspressung läßt sich ohne Schwierigkeiten sicherstellen, wenn mit einer Blechscheibe gearbeitet wird, die einen Durchmesser aufweist, der größer ist als der äußere Nenndurchmesser des Topfes. Vorzugsweise entspricht deren Blechdicke etwa der Blechdicke des Aufnahmebehälters. Die Blechscheibe kann sogar eine Blechdicke aufweisen, die um maximal 20 % kleiner ist als der Blechdicke des Aufnahmebehälterbodens entspricht.

Wie bereits erwähnt, kann das erfindungsgemäße Verfahren bei Umgebungstemperatur oder als Warmverformungsverfahren durchgeführt werden. Im letzteren Falle ist eine bevorzugte Ausführungsform der Erfindung dadurch gekennzeichnet, daß die Impulspressung in bezug auf den Aufnahmebehälter, die Kapselabdeckung und die Platine bei einer Temperatur durchgeführt wird, die im Bereich der Schmelztemperatur der Platine liegt, und daß mit einer Temperatur der Impulspreßwerkzeuge gearbeitet wird, die im Bereich zwischen 100 und 350° C liegt.

Überraschenderweise kann mit Hilfe des erfindungsgemäßen Arbeitsverfahrens ein Aufnahmebehälter der eingangs beschriebenen Gestaltung mit Kapselabdeckung, Kapselabdeckungskragen und zum Aufnahmebehälter hin konvexen Kapselabdeckungsboden hergestellt werden, der allen Anforderungen genügt, obgleich in bezug auf die Kapselabdeckung bei der Impulspressung von einer kragenfreien Blechscheibe ausgegangen wird, so daß die Vorfertigung einer Kapselabdeckung mit Kapselabdeckungskragen nicht erforderlich ist. Das beruht auf der funktionellen Verschmelzung der beschriebenen Maßnahmen: Die Ausbildung der bleibenden Verformung an der konstruktiv vorgegebenen Stelle ist eindeutig und mit hoher Präzision möglich, weil die Schweißverbindung impulspressungsfest ausgebildet ist. Eine solche impulspressungsfeste Schweißverbindung ist möglich, wenn mit einer elektrischen Widerstandsschweißung gearbeitet wird und eine ausreichende Energiemenge zugeführt wird. Sie ist insbesondere deshalb möglich, weil erfindungsgemäß mit einer verhältnismäßig dünnen Platine gearbeitet wird. Die Wechselwirkung der Verformung der Platine durch Fließpressung mit der gleichzeitigen Anformung des Kapselabdeckungskragens bewirkt in diesem wichtigen Bereich eine besonders ausgeprägte und feste intermetallische Verbindung, ohne daß die Zentrierung gestört wird. Die Randkante der Kapselabdeckung berührt den Aufnahmebehälter schließend, und zwar sowohl bei der Fertigung als auch nach der Abkühlung. Zwischen Aufnahmebehälterboden und Kapsel klafft kein Spalt, so daß bei Gebrauch oder Spülung Wasser nicht eintreten kann und störende Korrosionen nicht beobachtet werden.

Im folgenden wird die Erfindung anhand einer lediglich ein Ausführungsbeispiel darstellenden Zeichnung ausführlicher erläutert. Es zeigen in schematischer Darstellung
- Fig. 1: in einem Vertikalschnitt die Bauteile eines nach der Lehre der Erfindung herzustellenden Gar- oder Kochgerätes auf die bei dem erfindungsgemäßen Arbeitsverfahren eingewirkt wird,
- Fig. 2: die Bauteile nach Fig. 1 nach der Zentrierung durch eine elektrische Widerstandsschweißung mit zentralem Schweißpunkt,
- Fig. 3: den Gegenstand nach Fig. 2 in den ebenfalls in vertikaler Richtung geschnittenen Werkzeugen einer Presse zur Durchführung des erfindungsgemäßen Arbeitsverfahrens,
- Fig. 4: im Vertikalschnitt das hergestellte Gar- oder Kochgerät ausschnittsweise,
- Fig. 5: in gegenüber der Fig. 4 wesentlich vergrößertem Maßstab den Ausschnitt A aus dem Gegenstand der Fig. 4.

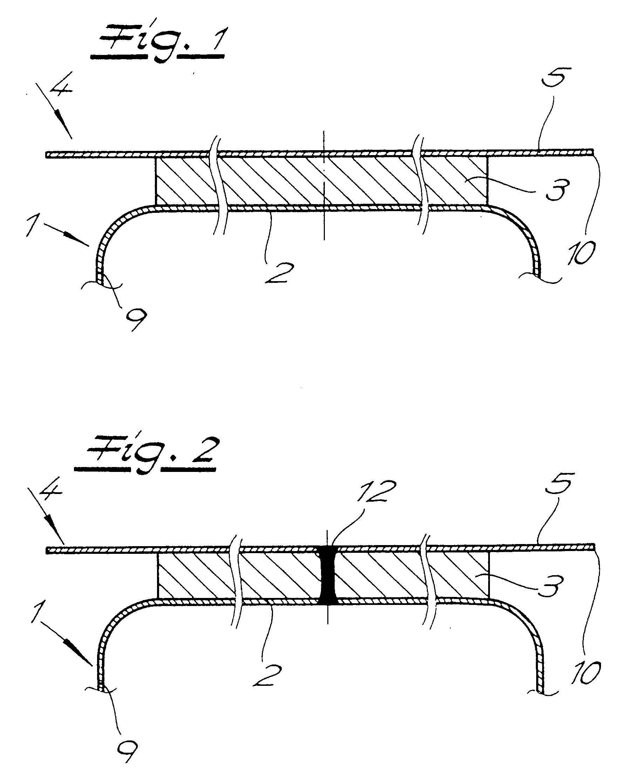

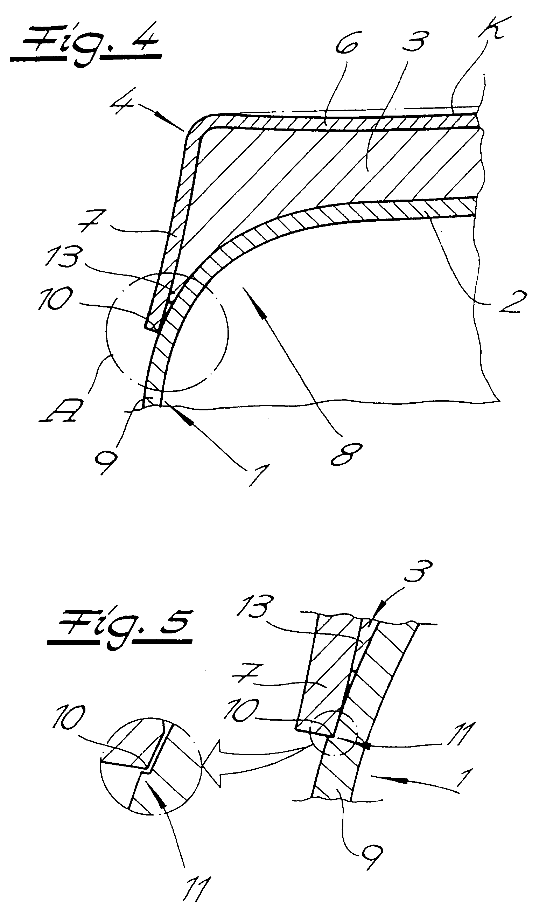

In den Fig. 1 bis 3 erkennt man die Bauteile zur Herstellung eines Gar- oder Kochgerätes mit rundem Aufnahmebehälter 1 für das Gar- oder Kochgerät. Man erkennt den Aufnahmebehälterboden 2, eine Platine 3 aus einem wärmeleitenden Platinenwerkstoff und eine Kapselabdeckung 4 der Platine 3. Die Kapselabdeckung 4 ist aus einer runden Blechscheibe 5 geformt. In der Fig. 4 erkennt man, daß die Kapselabdeckung 4 mit ihrem Kapselabdeckungsboden 6 zum Aufnahmebehälterboden 2 hin mit konvexer Krümmung K versehen ist sowie mit einem Kapselabdeckungskragen 7 an dem runden Aufnahmebehälter 1 in einem gekrümmten Übergangsbereich 8 zwischen Aufnahmebehälterboden 2 und Aufnahmebehältermantel 9 anliegt. Der Aufnahmebehälter 1 sowie die Kapselabdeckung 4 bestehen aus nichtrostendem Stahl. Die Platine 3 ist mit dem Aufnahmebehälterboden 2 und der Kapselabdeckung 4 intermetallisch verbunden.

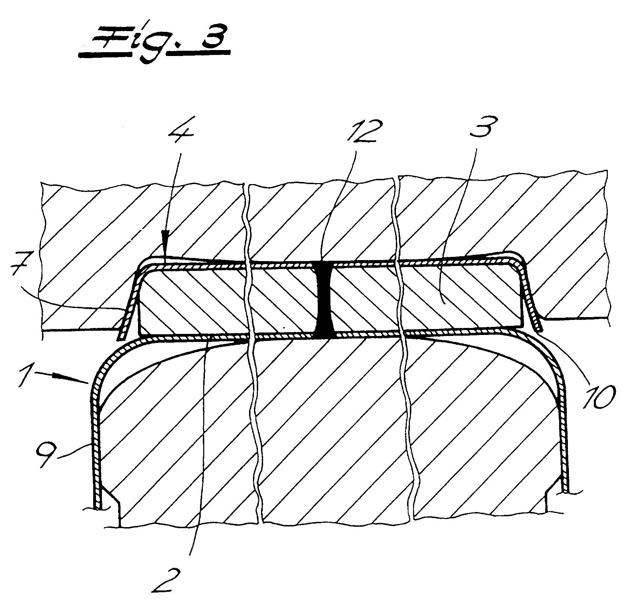

Aus einer vergleichenden Betrachtung der Fig. 1 und 2 entnimmt man, daß mit einer ebenen Blechscheibe 5 gearbeitet wird, aus der bei dem erfindungsgemäßen Verfahren die vollständige Kapselabdeckung 4 geformt wird. Die Blechscheibe 5 ist so gestaltet und dimensioniert, daß ihre Randkante 10 bei der Ausformung des Kapselabdeckungskragens 7 unter Ausbildung einer bleibenden Verformung 11 an dem Aufnahmebehälter 1 an diesen anpreßbar ist. Dazu ist ihr Durchmesser größer als der äußere Nenndurchmesser des Topfes, was in den Fig. 1 und 2 übertrieben dargestellt wurde. Die Durchmesserdifferenz beträgt in der Praxis mehrere Millimeter, z. B. 3 bis 5 mm. Die Fig. 2 zeigt, daß die Blechscheibe 5, die Platine 3 und der Aufnahmebehälterboden 2 durch eine Widerstandsschweißung im Zentrum impulspressungsfest mit einem Schweißpunkt 12 entsprechender Größe verschweißt sind. Dieser wurde zur Verdeutlichung in den Fig. 2 und 3 übertrieben dargestellt.

Betrachtet man die Fig. 3, so erkennt man, daß die Impulspressung unter Ausformung der konvexen Krümmung K des Kapselabdeckungsbodens 6 durchgeführt werden kann bzw. durchgeführt wird. Bei der beschriebenen Gestaltung wird erreicht, daß bei der Impulspressung zuerst die Luft aus dem Bereich zwischen der Blechscheibe 5 und dem sich ausbildenden Kapselabdeckungskragen 7 herausgedrückt sowie dabei und danach die bleibende Verformung 11 ausgebildet wird. Dazu wird auf die Fig. 5 verwiesen. Die bleibende Verformung 11 funktioniert als Dichtung in bezug auf die Fließverformung des Platinenwerkstoffes. Im Ergebnis wird erreicht, daß der Platinenwerkstoff sich mit einem Platinenkragen 13 bis in den Bereich der Dichtung bei 11 hineinpreßt. Auch insoweit wird auf die Fig. 4 und 5 verwiesen. Die Dicke der Platine 3 vor der Fließverformung im kalten Zustand ist um maximal 16 % dicker als die nach der Fließverformung. Im Ausführungsbeispiel erkennt man, daß mit einer Blechscheibe 5 gearbeitet wurde, deren Blechdicke etwa der Blechdicke des Aufnahmebehälters 1 entspricht. - Bezüglich der Temperaturverhältnisse wird auf den Patentanspruch 5 verwiesen.

## Patentansprüche

1. Arbeitsverfahren zur Herstellung eines Gar- oder Hochgerätes mit rundem Aufnahmebehälter (1) für das Gar- oder Kochgut,
welcher Aufnahmebehälter (1) einen Aufnahmebehälterboden (2), eine Platine (3) aus wärmeleitendem Platinenwerkstoff und eine Kapselabdeckung (4) der Platine (3) aufweist, welche Kapselabdeckung (4) aus einer runden Blechscheibe (5) geformt und mit ihrem Kapselabdeckungsboden (6) zum Aufnahmebehälter (1) hin mit konvexer Krümmung (K) versehen ist sowie mit einem Kapselabdeckungskragen (7) an dem runden Aufnahmebehälter (1) in einem gekrümmten Übergangsbereich (8) zwischen Aufnahmebehälterboden (2) und Aufnahmebehältermantel (9) anliegt, wobei der Aufnahmebehälter (1) sowie die Kapselabdeckung (4) aus nichtrostendem Stahl bestehen und die Platine (3) mit dem Aufnahmebehälterboden (2) und der Kapselabdeckung (4) intermetallisch verbunden ist,
wobei die Platine (3), die Blechscheibe (5) und der Aufnahmebehälterboden (2) zentriert und durch eine elektrische Widerstandsschweißung mit zentralem Schweißpunkt (12) verbunden werden und wobei danach durch eine einfache oder mehrfache Impulspressung mit Fließverformung die intermetallische Verbindung hergestellt und an der Blechscheibe (5) der Kapselabdeckungskragen (7) angeformt wird, der mit seinem Rand umlaufend an den Aufnahmebehälter (1) angelegt wird, **dadurch gekennzeichnet,**
daß mit einer Platine (3) gearbeitet wird, deren Dicke vor der Fließverformung im kalten Zustand um maximal 16 % dicker ist als nach der Fließverformung,
daß mit einer Blechscheibe (5) gearbeitet wird, deren Randkante (10) bei der Ausformung des Kapselabdeckungskragens (7), unter Ausbildung einer bleibenden stufenartigen Verformung (11) an dem Aufnahmebehälter (1), an diesen angepreßt wird daß diese Blechscheibe (5), die Platine (3) und der Aufnahmebehälterboden (2) durch die Widerstandsschweißung impulspressungsfest zentriert werden,
daß die Impulspressung unter Ausformung der konvexen Krümmung (K) des Kapselabdeckungsbodens (6) durchgeführt wird,
daß bei der Impulspressung zuerst die Luft aus dem Bereich zwischen der Blechscheibe (5) und dem sich ausbildenden Kapselabdeckungskragen (7) herausgedrückt sowie dabei und danach die bleibende stufenartige Verformung (11) als Dichtung in bezug auf die Fließverformung des Platinenwerkstoffes ausgebildet sowie der Platinenwerkstoff mit einem Platinenkragen (13) bis in den Bereich der Dichtung gepreßt wird.

2. Verfahren nach Anspruch 1, dadurch gekennzeichnet, daß mit einer Blechscheibe (5) gearbeitet wird, deren Durchmesser größer ist als der äußere Nenndurchmesser des Topfes.

3. Verfahren nach einem der Ansprüche 1 oder 2, dadurch gekennzeichnet, daß mit einer Blechscheibe (5) gearbeitet wird, deren Blechdicke etwa der Blechdicke des Aufnahmebehälters (1) entspricht.

4. Verfahren nach einem der Ansprüche 1 oder 2, dadurch gekennzeichnet, daß mit einer Blechscheibe (5) gearbeitet wird, deren Blechdicke um maximal 20 % kleiner ist als die Blechdicke des Aufnahmebehälters (1).

5. Verfahren nach einem der Ansprüche 1 bis 4, dadurch gekennzeichnet, daß die Impulspressung in bezug auf den Aufnahmebehälter (1), die Kapselabdeckung (4) und die Platine (3) bei einer Temperatur durchgeführt wird, die im Bereich der Schmelztemperatur der Platine (3) liegt, und daß mit einer Temperatur der Impulspreßwerkzeuge gearbeitet wird, die im Bereich zwischen 100 und 350° C liegt.

## Claims

1. An operating process for manufacturing a boiling or cooking utensil with a round receiver vessel (1) for the material to be boiled or cooked,
which receiver vessel (1) comprises a receiver vessel base (2), a bottom plate (3) of thermally conducting bottom plate material and an encapsulating cover (4) for the bottom plate (3), which encapsulating cover (4) is formed from a round sheet metal blank (5) and is provided with convex curvature (K) of its encapsulating cover base (6) towards the receiver vessel (1), and is seated with an encapsulating cover collar (7) against the round receiver vessel (1) in a curved transition region (8) between the receiver vessel base (2) and the receiver vessel sidewall (9), wherein the receiver vessel (1) and the encapsulating cover (4) consist of stainless steel and the bottom plate (3) is intermetallically bonded to the receiver vessel base (2) and to the encapsulating cover (4),
wherein the bottom plate (3), the sheet metal blank (5) and the receiver vessel base (2) are centred and joined by electric resistance welding with a central weld point (12), and wherein thereafter the intermetallic bond is produced by single or multiple impulse pressing with flow deformation of the intermetallic bond and the encapsulating cover collar (7), which is placed on the receiver vessel (1) with its edge encircling the latter, is integrally formed on the sheet metal blank (5), **characterised in that**
a bottom plate (3) is employed, the thickness of which in the cold state before flow deformation is greater by a maximum of 16 % than that after flow deformation,
that a sheet metal blank (5) is employed, the rim edge (10) of which is pressed against the receiver vessel (1) with the formation of a permanent step-like deformation (11) on the latter during the forming of the encapsulating cover collar (7), that this sheet metal blank (5), the bottom plate (3) and the receiver vessel base (2) are centred by resistance welding so that they are unaffected by impulse pressing,
that impulse pressing is effected with the formation of the convex curvature (K) of the encapsulating cover base (6),
that during impulse pressing the air is first pressed out of the region between the sheet metal blank (5) and the encapsulating cover collar (7) being formed, and at the same time and thereafter the permanent step-like deformation (11) is formed as a seal with respect to the flow deformation of the bottom plate material and a bottom plate collar (13) of the bottom plate material is pressed into the region of the seal.

2. A process according to claim 1, characterised in that a sheet metal blank (5) is employed, the diameter of which is larger than the nominal outside diameter of the pot.

3. A process according to either one of claims 1 or 2, characterised in that a sheet metal blank (5) is employed, the sheet metal thickness of which approximately corresponds to the sheet metal thickness of the receiver vessel (1).

4. A process according to either one of claims 1 or 2, characterised in that a sheet metal blank (5) is employed, the sheet metal thickness of which is a maximum of 20 % less than the sheet metal thickness of the receiver vessel (1).

5. A process according to any one of claims 1 to 4, characterised in that the impulse pressing with respect to the receiver vessel (1), the encapsulating cover (4) and the bottom plate (3) is effected at a temperature which is in the region of the melting point of the bottom plate (3), and that a temperature of the impulse pressing tools is employed which is in the range between 100 and 350°C.

## Revendications

1. Procédé de fabrication d'un appareil de cuisson équipé d'un récipient circulaire (1) pour le produit à cuire, le récipient (1) comportant un fond (2), une platine (3) en matériau thermiquement conducteur et une coiffe de protection (4) de la platine (3), ladite coiffe de protection (4) étant réalisée à partir d'un disque de tôle circulaire (5) et possédant une courbure convexe (K) entre son fond (6) et le récipient (1), et s'appliquant par un col (7) sur le récipient circulaire (1) dans une zone de transition courbée (8) entre le fond du récipient (2) et la paroi latérale (9) de ce dernier, le récipient (1) ainsi que la coiffe de protection (4) étant en acier inoxydable et la platine (3) étant réunie de façon intermétallique au fond (2) du récipient et à la coiffe de protection (4), dans lequel la platine (3), le disque de tôle (5) et le fond (2) du récipient sont centrés et réunis par soudage par résistance électrique avec un point de soudure central (12), on établit ensuite la liaison intermétallique par un pressage par impulsion simple ou multiple avec formage par fluage, et on façonne le col (7) de la coiffe de protection sur le disque de tôle (5), dont on applique le bord circonférentiellement au récipient (1), caractérisé en ce qu'on met en oeuvre une platine (3), dont l'épaisseur avant le formage par fluage à l'état à froid est au maximum 16% plus épaisse qu'après le formage par fluage,
en ce qu'on met en oeuvre un disque de tôle (5), dont le bord (10) lors du formage du col (7) de la coiffe de protection, avec obtention d'une déformation pas à pas permanente (11) sur le récipient (1), est appliqué par pression à ce dernier, en ce que ce disque de tôle (5), la platine (3) et le fond (2) du récipient sont centrés et fixés par pressage par impulsion par le soudage par résistance.
en ce que le pressage par impulsion est effectué avec déformation de la courbure convexe (K) du fond (6) de la coiffe de protection,
en ce que, lors du pressage par impulsion, tout d'abord l'air est expulsé de la région entre le disque de tôle (5) et le col (7) de la coiffe de protection en cours de formation, ainsi que lors et après la déformation pas à pas permanente (11) formée en tant qu'étanchéité vis-à-vis de la déformation par fluage du matériau de la platine ainsi que du matériau de la platine comprimé avec un col (13) de celle-ci jusqu'à proximité de l'étanchéité.

2. Procédé selon la revendication 1, caractérisé en ce qu'on met en oeuvre un disque de tôle (5) dont le diamètre est supérieur au diamètre nominal extérieur du récipient.

3. Procédé selon l'une des revendications 1 ou 2, caractérisé en ce qu'on met en oeuvre un disque de tôle (5) dont l'épaisseur de tôle correspond approximativement à l'épaisseur de tôle du récipient (1).

4. Procédé selon l'une des revendications 1 ou 2, caractérisé en ce qu'on met en oeuvre un disque de tôle (5), dont l'épaisseur de tôle est au maximum 20% inférieure à l'épaisseur de tôle du récipient (1).

5. Procédé selon l'une des revendications 1 à 4, caractérisé en ce que le pressage par impulsion par rapport au récipient (1),à la coiffe de protection (4) et à la platine (3) est effectué à une température se trouvant dans la plage de température de fusion de la platine (3), et en ce qu'on opère avec une température des outils de pressage par impulsion, qui se trouve comprise entre 100 et 350°C.
